(19) Europäisches Patentamt
European Patent Office
Office européen des brevets

(11) **EP 2 407 751 B1**

(12) **EUROPÄISCHE PATENTSCHRIFT**

(45) Veröffentlichungstag und Bekanntmachung des Hinweises auf die Patenterteilung:
**07.10.2015 Patentblatt 2015/41**

(51) Int Cl.:
**G01B 7/06** *(2006.01)* **G01R 21/02** *(2006.01)*
**F27B 14/20** *(2006.01)*

(21) Anmeldenummer: **10168043.7**

(22) Anmeldetag: **01.07.2010**

(54) **Verfahren und Vorrichtung zur rechnerischen Bestimmung der restlichen Stärke zumindest einer Wand eines Gefäßes**

Method and device for calculating the remaining thickness of at least one wall of a container

Procédé et dispositif de détermination informatique de l'épaisseur restante d'au moins une paroi d'un récipient

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**18.01.2012 Patentblatt 2012/03**

(73) Patentinhaber: **Ingenieurbüro Franke GlasTechnologie-Service**
**01468 Moritzburg / OT Friedewald (DE)**

(72) Erfinder:
• **Pfitzner, Norbert**
**01259 Dresden (DE)**

• **Franke, Matthias**
**01468 Moritzburg / OT Friedewald (DE)**

(74) Vertreter: **Gulde & Partner**
**Patent- und Rechtsanwaltskanzlei mbB**
**Wallstraße 58/59**
**10179 Berlin (DE)**

(56) Entgegenhaltungen:
**EP-A1- 1 004 863     DE-A1- 2 510 644**
**DE-A1- 4 136 447     DE-A1- 4 322 463**
**DE-A1- 10 244 826    DE-B- 1 220 086**
**FR-A1- 2 605 409**

**Beschreibung**

Die vorliegende Erfindung betrifft ein Verfahren sowie eine Vorrichtung zur rechnerischen Bestimmung der restlichen Stärke zumindest einer Wand eines Gefäßes, insbesondere der Wand einer Schmelzwanne zur Aufnahme von Glasschmelze.

Außerdem betrifft die vorliegende Erfindung ein Verfahren zur rechnerischen Bestimmung eines Wandstärkenverlaufes einer Wand eines Gefäßes unter Zuhilfenahme des Verfahrens zur rechnerischen Bestimmung der restlichen Stärke zumindest einer Wand des Gefäßes.

Ergänzt wird die vorliegende Erfindung durch ein Computerprogramm, das es einer Datenverarbeitungseinrichtung ermöglicht, nachdem es in Speichermittel der Datenverarbeitungseinrichtung geladen worden ist, das erfindungsgemäße Verfahren zur rechnerischen Bestimmung des restlichen Stärke zumindest einer Wand eines Gefäßes durchzuführen.

Bei Schmelzanlagen und insbesondere Glasschmelzanlagen ist das Problem bekannt, dass Wände und/oder Böden der Gefäße zur Aufnahme der Schmelze eine Verringerung der Wandstärke erfahren. Der Grund dafür ist die insbesondere wegen ihrer hohen Temperatur und Viskosität relativ aggressiv und abrasiv wirkende Schmelze im Behälter. Dabei kommt es häufig zu punktuellen, kanalartigen und/oder trichterförmigen Verringerungen der Wandstärke.

Eine manuelle Kontrolle der Wandstärke führt oftmals zu Behinderungen des Produktionsprozesses und bindet personelle Kapazität. Automatisiert erfolgende Wandstärkemessungen vor Ort sind jedoch üblicherweise prozesstechnisch sehr aufwendig und liefern nicht genaue Messwerte.

Eine Schmelzanlage und insbesondere eine Glasschmelzanlage kann jedoch theoretisch noch so lange betrieben werden, solange die Wand des Gefäßes zur Aufnahme der Schmelze noch nicht durchbrochen ist. Ungenaue automatisierte Messverfahren führen jedoch dazu, dass entweder der Produktionsprozess zu früh unterbrochen wird, da angeblich ein Durchbruch der Wand unmittelbar bevorsteht, oder dazu, dass ein Durchbruch der Wand nicht erkannt wird und es somit zu einem Durchbruch und einer damit verbundenen Havarie kommt.

Zur Lösung dieses Problems sind unterschiedliche Ansätze bekannt. Es offenbart die EP 1 004 863 A1 ein Verfahren und eine Messanordnung zum Bestimmen von Veränderungen des Betriebszustandes in Glasschmelze führenden Behältern. Dabei werden örtlich Temperaturgradienten über Temperatur-Messsonden erfasst, in einer Matrix abgespeichert und die dazu gehörigen Raumkoordinaten der Messungen nacheinander abgerufen und die gespeicherten Werte mit früheren Messungen verglichen und daraus die zeitlichen und örtlichen Veränderungen des Betriebszustandes abgeleitet.

Ein weiterer Ansatz besteht gemäß der DE 102 44 826 A1 darin, dass zwecks Überwachung des Verschleißzustandes der Feuerfestauskleidung von Schmelzwannen eine thermisch verursachte Widerstandsänderung eines Widerstandselementes in der Feuerfestauskleidung beim Vordringen der Schmelze zu diesem Widerstandselement ausgewertet wird.

Die genannten Ansätze sind jedoch, wie oben bereits erwähnt, entweder nicht ausreichend zuverlässig zur exakten Bestimmung der restlichen Wandstärke oder sie erlauben lediglich eine qualitative Bewertung hinsichtlich des Erreichens eines bestimmten Zustandes, nämlich einer bestimmten restlichen Dicke der Wand.

Zuverlässige quantitative Aussagen über die restliche Wandstärke eines Gefäßes zur Aufnahme von Schmelze, insbesondere zur Aufnahme von Glasschmelze, sind mit den genannten Methoden nicht möglich.

Daneben ist aus DE 41 36 447 und FR 2 605 409 bekannt, die Stärke einer Gefäßwand durch Messungen des elektrischen Widerstands und der Temperatur zu bestimmen.

Der Erfindung liegt somit die Aufgabe zugrunde, ein Verfahren sowie eine Vorrichtung zur Verfügung zu stellen, mit denen in einfacher, kostengünstiger und zuverlässiger Weise eine exakte quantitative Bestimmung der restlichen Wandstärke von Behältern, insbesondere von Behältern zur Aufnahme von Schmelze, möglich ist.

Diese Aufgabe wird durch das erfindungsgemäße Verfahren zur rechnerischen Bestimmung der restlichen Stärke zumindest einer Wand eines Gefäßes gemäß Anspruch 1 sowie durch die Vorrichtung zur rechnerischen Bestimmung der restlichen Stärke zumindest einer Wand eines Gefäßes gemäß Anspruch 13 gelöst. Vorteilhafte Ausgestaltungen des erfindungsgemäßen Verfahrens sind in den Unteransprüchen 2 bis 11 angegeben. Vorteilhafte Ausgestaltungen der erfindungsgemäßen Vorrichtung sind in den Unteransprüchen 14 und 15 angegeben. Ergänzt wird die Lösung der Aufgabe durch ein Verfahren zur rechnerischen Bestimmung eines Wandstärkenverlaufes einer Wand eines Gefäßes gemäß Anspruch 12 sowie durch ein Computerprogramm, welches es ermöglicht, das erfindungsgemäße Verfahren zur rechnerischen Bestimmung des restlichen Stärke zumindest einer Wand eines Gefäßes durchzuführen gemäß Anspruch 16.

Es wird erfindungsgemäß ein Verfahren zur rechnerischen Bestimmung der restlichen Stärke $s_n$ zumindest einer Wand eines Gefäßes, insbesondere einer Schmelzwanne, zur Verfügung gestellt, bei dem unter Verwendung des elektrischen Widerstandes und der elektrischen Leitfähigkeit $\chi$ der Wand eine theoretische Wandstärke $s_n^*$ berechnet wird, die Temperatur der Wand rechnerisch unter Einbeziehung der theoretischen Wandstärke $s_n^*$ bestimmt wird, und die elektrische Leitfähigkeit $\chi$ in Abhängigkeit von der ermittelten Temperatur korrigiert wird, und danach die Wandstärke

**EP 2 407 751 B1**

$s_n$ unter Verwendung der korrigierten elektrischen Leitfähigkeit $\chi$ erneut berechnet wird.

Durch das erfindungsgemäße Verfahren ist somit iterativ sowie zeitnah eine quantitative Feststellung der Wandstärke möglich, ohne Messmittel in das zu untersuchende Gerät einbringen zu müssen und deswegen Produktionsvorgänge behindern zu müssen. Die quantitative Aussage lässt sich unter bestimmten Bedingungen, nämlich wenn die Berechung einer Wandstärke 0 mm ergibt, auch als qualitative Aussage hinsichtlich des völligen Durchbruchs der Wand an der bestreffenden Stelle werten.

Die Genauigkeit der errechneten Werte wird durch den Abgleich der Materialkonstanten in Abhängigkeit von der tatsächlich herrschenden Temperatur im Material gewährleistet.

Vorteilhafterweise umfasst das Verfahren zur Verwendung des elektrischen Widerstandes der Wand die folgenden Schritte:

a) Messung einer Spannung $U_E$ zwischen einem im Gefäß aufgenommenen Medium und der Erde,
b) Messung einer Spannung $U_{sen}$ zwischen einem auf der Rückseite der zu messenden Wand angeordneten Sensor und der Erde,
c) Messung einer Stromstärke $I_{G-Sen}$ zwischen dem im Gefäß aufgenommenen Medium und dem Sensor,
d) Bestimmung einer wirksamen Fläche A der zu untersuchenden Wand, durch die der Stromfluss vom im Gefäß aufgenommenen Medium zum Sensor erfolgt,
e) Ermittlung der theoretischen Wandstärke $s_n^*$ unter Einbeziehung der elektrischen Leitfähigkeit $\chi$ des Materials der Wand mit der mathematischen Beziehung (1)

$$s_n^* = \frac{(U_E - U_{Sen}) \cdot A \cdot \chi}{I_{G-Sen}} \qquad (1)$$

f) Feststellung der Temperatur der Wand an der stromdurchflossenen Stelle,
g) Korrektur des Wertes der elektrischen Leitfähigkeit $\chi$ in Abhängigkeit der Temperatur der Wand,
h) Durchführung wenigstens einer Wiederholung der Ermittlung der theoretischen Wandstärke $s_n^*$ mit der mathematischen Beziehung (1) unter Nutzung der korrigierten elektrischen Leitfähigkeit $\chi$,
i) Ausgabe des letztermittelten Wertes $s_n^*$ als Wandstärke $s_n$.

Die Feststellung der Temperatur der Wand an der stromdurchflossenen Stelle gemäß Punkt f) erfolgt vorzugsweise durch einen potentialgetrennten Sensor, um das Auftreten von Fehlspannungen zu vermeiden.

Der Widerstand R einer Wand wird bestimmt durch:

$$R = \frac{U_E - U_{Sen}}{I_{G-Sen}} \qquad (i)$$

oder auch durch:

$$R = \frac{s}{\chi \cdot A} \qquad (ii)$$

Eine Gleichsetzung dieser Beziehungen (i) und (ii) führt zur Beziehung (1).

Die Schmelzwanne kann z. B. eine Glasschmelzwanne sein, so dass das Medium im Gefäß eine Glasschmelze ist. Die genannte Rückseite des Gefäßes ist dabei die dem Medium abgewandte Seite. Vorteilhafterweise erfolgt die Messung der Spannung und Stromstärke möglichst zum selben Zeitpunkt oder zumindest zeitnah.

Vorzugsweise wird die wirksame Fläche A durch die Beziehung (2) ermittelt:

$$A = \frac{I_{G-Sen}}{(U_E - U_{Sen})}\left(\frac{s}{\chi}\right) \qquad (2)$$

Die Temperatur der Wand $\vartheta$ wird rechnerisch unter Einbeziehung des Wärmestromes $\dot{Q}$ durch die Wand, der Wärmeleitfähigkeit $\lambda$ der Wand, der ermittelten theoretischen Wandstärke $s_n^*$, der ermittelten wirksamen Fläche A sowie der Temperatur $\vartheta_G$ des Mediums im Behälter ermittelt.

Dieser Verfahrensaspekt wird für eine Wand mit nur einer Schicht wie folgt durchgeführt:

Ermittlung des Wärmestromes $\dot{Q}_{G\text{-}Sen}$ durch die Wand, gemessen vom Medium zum Sensor

$$\dot{Q}_{G\text{-}Sen} = \frac{\lambda_{G\text{-}Sen}}{\dot{s}} \cdot A \cdot \left(\vartheta_G - \vartheta_{Sen}\right)$$

wobei $\lambda_{G\text{-}Sen}$ für die Wärmeleitfähigkeit der Wand steht, $\vartheta_G$ für die Temperatur des Mediums steht und $\vartheta_{Sen}$ für die Temperatur des Sensors steht.

Eine Umstellung nach $\vartheta_{Sen}$ ergibt:

$$\vartheta sen = \vartheta_G - \frac{\dot{Q}_{G\text{-}Sen} \cdot \dot{s}}{A \cdot \lambda_{G\text{-}Sen}}.$$

Daraus wird rechnerisch die Temperatur 9 der Wand ermittelt:

Diese Temperatur wird zur Korrektur des Wertes der elektrischen Leitfähigkeit eingesetzt.

$$\vartheta = \frac{1}{2}\left(\vartheta_{sen} + \vartheta_G\right)$$

Vorteilhafterweise wird die Ermittlung der theoretischen Wandstärke $s_n^*$ mit der mathematischen Beziehung (1) unter Nutzung der korrigierten elektrischen Leitfähigkeit $\chi$ so oft wiederholt, bis ein Abbruchkriterium $A_K$ in Form einer bestimmten Differenz zwischen einer zuvor bestimmten theoretischen Wandstärke $s_{n-1}^*$ und einer letztbestimmten theoretischen Wandstärke $s_n^*$ erreicht ist, wonach der letztermittelte Wertes $s_n^*$ als Wandstärke $s_n$ ausgegeben wird.
Das Abbruchkriterium $A_K$ kann dabei zwischen 0,1 mm bis 50 mm , vorzugsweise 1 mm bis 5 mm betragen.
Das heißt, wenn die Differenz zwischen einer zuvor bestimmten theoretischen Wandstärke $s_{n-1}^*$ und einer letztbestimmten theoretischen Wandstärke $s_n^*$ größer oder gleich des vorbestimmten Wertes ist, der zwischen 0,1 mm bis 1mm betragen kann, wird der letztermittelte Wert $s_n^*$ als Wandstärke $s_n$ ausgegeben. Ist dagegen die Differenz zwischen einer zuvor bestimmten theoretischen Wandstärke $s_{n-1}^*$ und einer letztbestimmten theoretischen Wandstärke $s_n^*$ kleiner als der vorbestimmte Wert, dann wird die Ermittlung der theoretischen Wandstärke $s_n^*$ wiederholt, und zwar so lange, bis das Abbruchkriterium $A_K$ erfüllt ist. Dann ist anzunehmen, dass die Rechnung mit ausreichender Genauigkeit hinsichtlich der elektrischen Leitfähigkeit durchgeführt wurde und es kann der Wert der Wandstärke $s_n$ ausgegeben werden.
Das erfindungsgemäße Verfahren kann an einer mehrere Schichten umfassenden Wand durchgeführt werden und zur Bestimmung der Wandstärke einer jeweiligen Schicht nacheinander an den Schichten durchgeführt werden.
In einer Ausgestaltung dieses Verfahrensschrittes ist vorgesehen, dass die Stärke einer Schicht $sch_n$ erst ermittelt wird, wenn die Ermittlung der Stärke der in Richtung des Mediums vorgelagerten Schicht $sch_{n-1}$ eine Stärke von 0 mm ergibt.
Die elektrische Leitfähigkeit $\chi$ des Materials der zu berechnenden Wand kann vor der Durchführung der bisher angegebenen Verfahrensschritte in Versuchen ermittelt worden sein.
Alternativ lässt sich die elektrische Leitfähigkeit $\chi$ auch aus Tabellen oder bekannten Funktionen der elektrischen Leitfähigkeit in Abhängigkeit von der jeweiligen Temperatur entnehmen.
Vorteilhafterweise werden Trendverläufe der restlichen Wandstärke $s_n$ je wirksamer Fläche aus mehreren (n) Bestimmungen der restlichen Stärke $s_n$ erstellt und diese Trendverläufe werden ausgegeben.
Außerdem wird ein Verfahren zur rechnerischen Bestimmung eines Wandstärkenverlaufs einer Wand eines Gefäßes zur Verfügung gestellt, bei dem das erfindungsgemäße Verfahren zur rechnerischen Bestimmung der restlichen Stärke $s_n$ zumindest einer Wand eines Gefäßes durchgeführt wird, wobei die zu jeweils einer wirksamen Fläche A ermittelten Wandstärken $s_n$ eine Interpolation zur Ermittlung des Restwandstärkenverlaufs $s_{ges}$ zwischen mehreren benachbarten wirksamen Flächen $A_n$ durchgeführt wird und der interpolierte Verlauf ausgegeben wird.
Durch die Interpolation werden die zu benachbarten wirksamen Flächen ermittelten Wandstärken in einer Kurve bzw. Funktion zusammengefasst, aus der Rückschlüsse auf die restliche Wandstärke zwischen den wirksamen Flächen, insofern diese zueinander beabstandet sind, gezogen werden können. Diese Interpolation wird bevorzugt für die gesamte sensorkontrollierte Wand, wie z. B. eine sensorkontrollierte Bodenfläche eines Gefäßes zur Aufnahme von Glasschmelze, durchführen.

Ein weiterer Aspekt der Erfindung ist eine Vorrichtung zur rechnerischen Bestimmung der restlichen Stärke $s_n$ zumindest einer Wand eines Gefäßes, welche einen Behälter, insbesondere Behälter zur Aufnahme einer Glasschmelze, eine Einrichtung zur Spannungsapplikation, eine Einrichtung zur Spannungsmessung, eine Einrichtung zur Strömstärkemessung, eine Einrichtung zur Temperaturmessung, sowie eine Steuerungseinheit umfasst, wobei die Steuerungseinrichtung derart eingerichtet ist, das erfindungsgemäße Verfahren zu steuern und die Berechnungsvorgänge vorzunehmen.

Die Einrichtung zur Spannungsapplikation ist bevorzugt derart ausgestaltet, dass sie wenigstens einen in dem Medium im Behälter platzierten oder an der dem Medium zugewandten Behälterwand angeordneten Kontakt sowie einen Kontakt auf der dem Medium abgewandten Seite der Wand angeordneten Kontakt umfasst.

Zwischen diesen Kontakten kann die Einrichtung zur Spannungsmessung angeordnet sein. Diese Einrichtung zur Spannungsmessung kann mit einer Einrichtung zur Strömstärkemessung kombiniert sein.

Das heißt, dass die erfindungsgemäße Vorrichtung insbesondere zur Durchführung des erfindungsgemäßen Verfahrens zur rechnerischen Bestimmung der restlichen Stärke $s_n$ zumindest einer Wand eines Gefäßes ausgestaltet ist.

Die Vorrichtung zur rechnerischen Bestimmung der restlichen Stärke $s_n$ zumindest einer Wand eines Gefäßes ist bevorzugt derart ausgestaltet, dass sie als eine Einrichtung zur Temperaturmessung im Medium einen ersten Temperaturfühler umfasst, der dicht oder unmittelbar an der wirksamen Fläche angeordnet ist, und einen zweiten Temperaturfühler umfasst, der an der dem Medium gegenüberliegenden Seite der Wand angeordnet ist.

Das heißt, die Einrichtung zur Temperaturmessung weist einen ersten Temperaturfühler in der Nähe des Mediums im Behälter, wie zum Beispiel an der dem Medium zugewandten Seite der Wand, und einen zweiten Temperaturfühler bzw. Sensor an der dem Medium abgewandten Seite der Wand auf. Dieser Sensor ist bevorzugt in der unmittelbaren Nähe des Kontaktes zur Spannungsapplikation angeordnet.

Vorzugsweise ist die Wand mehrschichtig ausgeführt.

Das heißt, es sind mehrere Schichten aus bevorzugt unterschiedlichen Materialien ausgebildet, wie sie z.B. zum Aufbau eines Gefäßes oder einer Wanne zur Aufnahme einer Glasschmelze verwendet werden. Der zweite Temperaturfühler sowie auch ein Kontakt der Einrichtung zur Spannungsbeaufschlagung ist dann an der Außenseite der äußersten Schicht angeordnet.

Des weiteren wird erfindungsgemäß ein Computerprogramm zur Verfügung gestellt, das es einer Datenverarbeitungseinrichtung ermöglicht, nachdem es in Speichermittel der Datenverarbeitungseinrichtung geladen worden ist, das erfindungsgemäße Verfahren zur rechnerischen Bestimmung der restlichen Stärke $s_n$ zumindest einer Wand eines Gefäßes durchzuführen.

Ein erfindungsgemäßes Computerprogramm kann aus einem elektronischen Datennetz, wie beispielsweise aus dem Internet, auf eine an das Datennetz angeschlossene Datenverarbeitungseinrichtung heruntergeladen werden.

Das Verfahren zur Berechnung der Wandstärke ist dabei nicht nur auf Böden eines Gefäßes, sondern auch an Seitenwänden, wie z. B. den Seitenwänden eines Schmelzbassins, einsetzbar.

Eine weitere Ausgestaltung der Erfindung besteht darin, dass die erfindungsgemäße Vorrichtung dadurch ergänzt ist, dass mindestens ein flächenhaftes elektrisch leitfähiges erstes Kontaktelement in die Wandung der Schmelzwanne beabstandet zu einer mit der Schmelze in Kontakt kommenden Oberfläche an einer definierten Position integriert ist. Außerdem ist ein mit der Schmelze verbundenes elektrisch leitfähiges zweites Kontaktelement sowie eine erste Auswerteschaltung zur Ermittlung eines Stromflusses zwischen dem wenigstens einen ersten Kontaktelement und dem zweiten Kontaktelement vorgesehen. An der wenigstens einen definierten Position ist wenigstens ein Temperatursensor angeordnet, und dieser Temperatursensor ist mit einer zweiten Auswerteschaltung verbunden, wobei die erste und die zweite Auswerteschaltung miteinander verknüpft sind.

Damit ist es möglich, zwei unabhängig von einander arbeitende Messanordnungen miteinander zu verknüpfen. Das heißt, dass der durch ein Schmelzdurchbruch verursachte Kontakt mit dem ersten Kontaktelement durch die erste Auswerteschaltung detektiert wird. Gleichzeitig wird über die zweite Auswerteschaltung dieses Signal auf Plausibilität verifiziert. Durch eine Anordnung von einer Vielzahl von verteilten Kontaktelementen lässt sich so sehr genau ein Bild von dem tatsächlichen Verschleißzustand herstellen. Die Messungen werden genauer und sicherer.

Das heißt, die beiden unterschiedlichen Messverfahren lassen sich parallel zueinander durchführen und die Ergebnisse lassen sich dann zu einer Endaussage verknüpfen.

Die Erfindung wird im Folgenden anhand der beiliegenden Zeichnungen näher erläutert. Es zeigen:

Figur 1    einen vierschichtigen Wandaufbau in Schnittdarstellung:

Figur 2    einen Ausschnitt aus dem vierschichtigen Wandaufbau in Schnittdarstellung in Bezug zum Verfahrensschritt der Ermittlung der Elektrodenspannung und Sensorspannung;

Figur 3     einen Ausschnitt aus dem vierschichtigen Wandaufbau in Schnittdarstellung in Bezug zum Verfahrensschritt der Ermittlung der Spannung zwischen Elektrode und Sensor;

Figur 4     einen Ausschnitt aus dem vierschichtigen Wandaufbau in Schnittdarstellung in Bezug zum Verfahrensschritt der Berechnung der Temperaturen zwischen den Schichten;

Figur 5     einen Ausschnitt aus dem vierschichtigen Wandaufbau in Schnittdarstellung in Bezug zum Verfahrensschritt der Berechnung der Temperaturen in den Schichten;

Figur 6     einen Ausschnitt aus dem vierschichtigen Wandaufbau in Schnittdarstellung in Bezug zum Verfahrensschritt der Berechnung der Restwandstärke und

Figur 7     ein Ablaufschema des erfindungsgemäßen Verfahrens, bei dem die Wandstärken der Schichten berechnet werden.

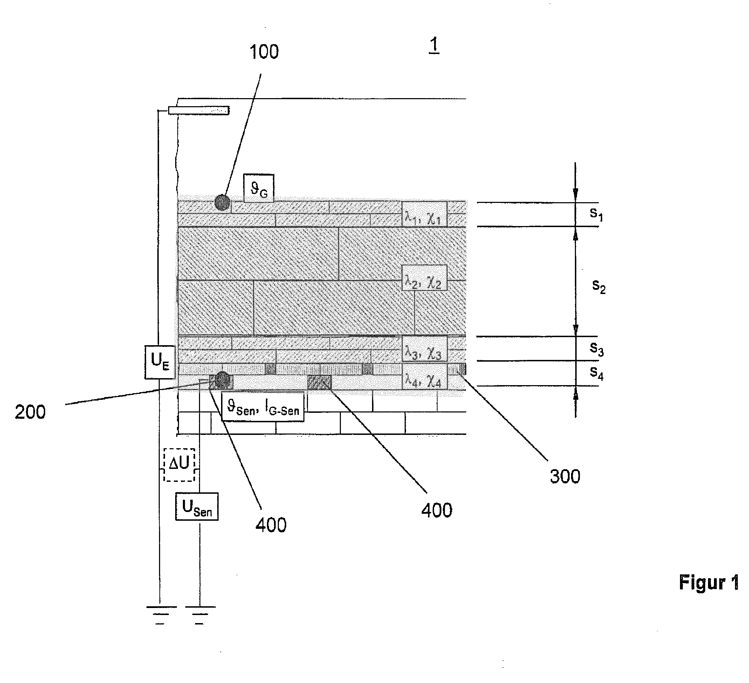

Zunächst wird Bezug genommen auf Figur 1, in der der Aufbau einer vierschichtigen Wand dargestellt ist.

Die einzelnen Schichten sind mit $s_1$ bis $s_4$ gekennzeichnet.

Im Folgenden werden die Schritte des Verfahrens erläutert, wobei die jeweils zu messende Größe oder zu bestimmende Größe oder anderweitig, wie z. B. aus Versuchen oder Tabellen, zu ermittelnde Größe, in der jeweiligen Figur im Wesentlichen an der Stelle der Messung oder der jeweiligen Schicht zugeordnet abgebildet ist. Es wird dabei beispielhaft Bezug genommen auf einen Behälter zur Aufnahme von Glasschmelze.

Figur 1 verdeutlicht die Ausgangssituation, in der ein erster Temperaturfühler 100 an der Innenseite des Behälters 1 angeordnet ist und hinter einer Isolierschicht 300 ein zweiter Temperaturfühler 200 angeordnet ist.

Die vierte Schicht $s_4$ ist in etwa zur Hälfte durch die Isolierschicht 300 ausgebildet.

In regelmäßigen Abständen sind unter der Isolierschicht 300 Sensoren 400 angeordnet.

Generell sind Messungen durchzuführen von:

Temperatur des Sensors $\vartheta_{Sen}$ in [K]
Temperatur des Glases $\vartheta_G$ in [K]
Strom zwischen Glas und Sensor $I_{G\text{-}Sen}$ in [mA]
Elektrodenspannung $U_E$ in [V]
Sensorspannung $U_{Sen}$ in [V]

Alternativ kann gemessen werden:

Spannung zwischen Elektrode und Sensor $\Delta U$ in [V], wobei gilt: $\Delta U = U_E - U_{Sen}$

Als bekannt vorausgesetzt werden die Dickenmaße $S_{i=1..4}$ der Schichten i in [mm], zumindest vor Beginn des Verfahrens.

Auf Grund der Kenntnis der Materialien der Schichten sind auch die Wärmeleitfähigkeit $\lambda_{i=1..4}$ in [W/(m K)] sowie der elektrische Leitfähigkeit $\chi_{i=1..4}$ in [A/(m V)] bekannt.

Gesucht ist die Restwandstärke $s_{Rest}$ in [mm].

Diese errechnet sich aus:

$$s_{\mathrm{Re}st} = s_1 + s_2 + s_3 + \frac{1}{2} \cdot s_4, \qquad\qquad \text{(i)}$$

wobei $S_4$ je nach tatsächlicher Beschaffenheit gegebenenfalls mit einem anderen Faktor als ½ in die Summe eingehen kann.

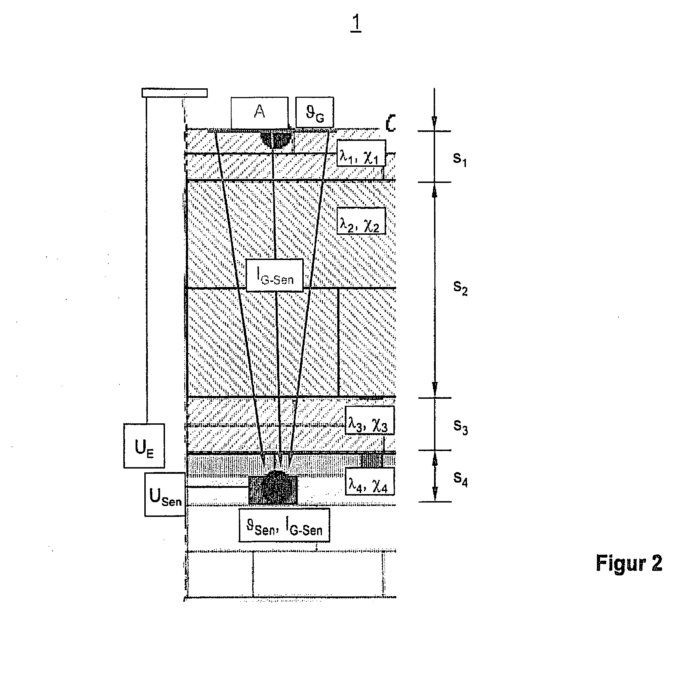

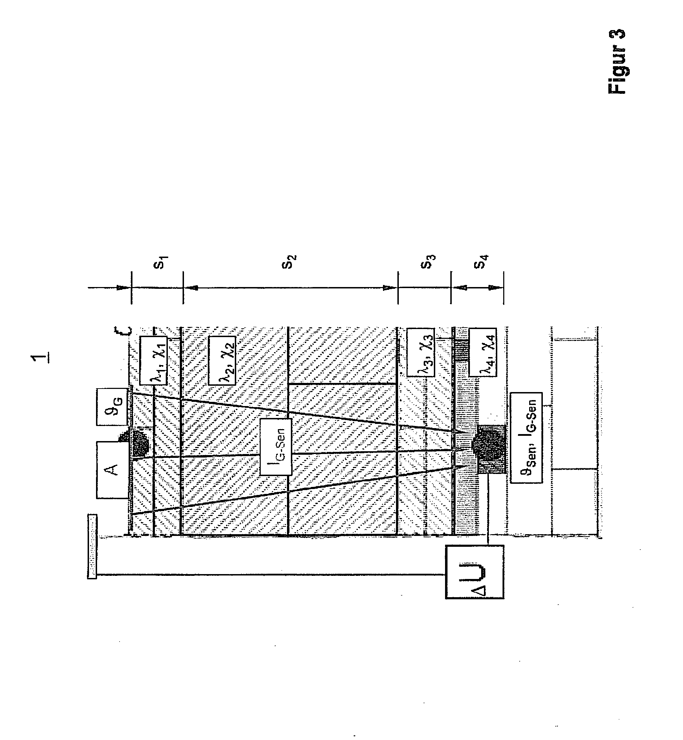

Zunächst ist die wirksame Fläche A in [mm] festzustellen. Zur Erläuterung dieses Schrittes wird auf die Figuren 2 und 3 verwiesen.

Dafür wird verwendet:

Strom zwischen Glas und Sensor $I_{G\text{-}Sen}$ in [mA]
Elektrodenspannung $U_E$ in [V]
Sensorspannung $U_{Sen}$ in [V]
Dickenmaße $s_{i=1..4}$ der Schichten i in [mm],

elektrische Leitfähigkeit $\chi_{i=1..4}$ in [A/(m V)]

Zunächst wird der elektrischer Widerstand $R_{G\text{-sen}}$ in [$\Omega$] zwischen der Glasschmelze und dem Sensor ermittelt:

$$R_{G-Sen} = \frac{\Delta U}{I_{G-Sen}} \qquad \text{(ii)}$$

Dies entspricht einem elektrischen Widerstand $R_{G\text{-Sen}}$:

$$R_{G-Sen} = R_1 + R_2 + R_3 + \frac{1}{2}R_4, \qquad \text{(iii)}$$

Die einzelnen Widerstände Rn in [$\Omega$] der einzelnen Schichten n wie in Figur 3 dargestellt lassen sich errechnen aus:

$$R_1 = \frac{s_1}{\chi_1 \cdot A} \qquad \text{(iv)}$$

$$R_2 = \frac{s_2}{\chi_2 \cdot A} \qquad \text{(v)}$$

$$R_3 = \frac{s_3}{\chi_3 \cdot A} \qquad \text{(vi)}$$

$$R_4 = \frac{s_4}{\chi_4 \cdot A} \qquad \text{(vii)}$$

Daraus ergibt sich:

$$\frac{1}{A}\left(\frac{s_1}{\chi_1} + \frac{s_2}{\chi_2} + \frac{s_3}{\chi_3} + \frac{s_4}{2 \cdot \chi_4}\right) = \frac{(U_E - U_{Sen})}{I_{G-Sen}} \qquad \text{(viii)}$$

umgestellt nach A:

$$A = \frac{I_{G-Sen}}{(U_E - U_{Sen})}\left(\frac{s_1}{\chi_1} + \frac{s_2}{\chi_2} + \frac{s_3}{\chi_3} + \frac{s_4}{2 \cdot \chi_4}\right) \qquad \text{(ix)}$$

Es bietet sich an, die wirksame Fläche z. B. erst 8 Wochen nach Inbetriebnahme des Gefäßes, insbesondere wenn es zur Aufnahme von Glasschmelze dient, zu ermitteln.

Danach wird die Restwandstärke der ersten Schicht $s_{Rest}$ ermittelt. Diese Ermittlung kann z. B. täglich vorgenommen werden.

Dazu müssen zum jeweils aktuellen Zeitpunkt gemessen werden:

Temperatur des Sensors $\vartheta_{Sen}$ in [K]
Temperatur des Glases $\vartheta_G$ in [K]
Strom zwischen Glas und Sensor $I_{G\text{-Sen}}$ in [mA]
Elektrodenspannung $U_E$ in [V]
Sensorspannung $U_{Sen}$ in [V]

Bereitgestellt wird der errechnete Wert der wirksamen Fläche A sowie auch die Wärmeleitfähigkeit $\lambda_{i=1..4}$ in [W/(m K)] und die elektrische Leitfähigkeit $\chi_{i=1..4}$ in [A/(m V)].

Dafür ist zunächst die Restwandstärke der ersten Schicht $s_1^*$ zu bestimmen.

Es gilt:

$$R_1 = \frac{s_1^*}{\chi_1 \cdot A} \tag{x}$$

da die Widerstandsminderung der ersten Schicht proportional zur Dickenminderung der ersten Schicht ist.

Daraus folgt:

$$\frac{s_1^*}{\chi_1 \cdot A} = \frac{U_E - U_{Sen}}{I_{G-Sen}} - \frac{1}{A}\left(\frac{s_2}{\chi_2} + \frac{s_3}{\chi_3} + \frac{s_4}{2 \cdot \chi_4}\right) \tag{xi}$$

umgestellt nach $S_1^*$:

$$s_1^* = \frac{(U_E - U_{Sen}) \cdot A \cdot \chi_1}{I_{G-Sen}} - \chi_1\left(\frac{s_2}{\chi_2} + \frac{s_3}{\chi_3} + \frac{s_4}{2 \cdot \chi_4}\right) \tag{xii}$$

Anschließend werden die Temperaturen der einzelnen Schichten durch Berechnung ermittelt.

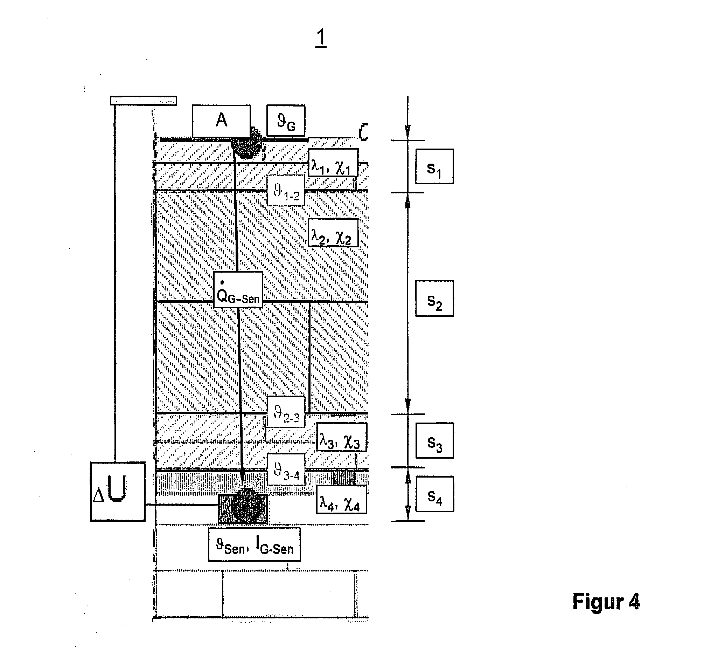

Für den Wärmestrom $\dot{Q}_{G-Sen}$, wie in Figur 4 ersichtlich, zwischen der Glasschmelze und dem Sensor gilt:

$$\dot{Q}_{G-Sen} = \frac{\lambda_{G-Sen}}{s_{ges}} \cdot A \cdot \left(\vartheta_G - \vartheta_{Sen}\right) \tag{xiii}$$

wobei $s_{ges}$ für die Stärke der gesamten Wand steht.

Es gilt weiterhin:

$$\frac{\lambda_{G-Sen}}{s_{ges}} = \frac{\lambda_1}{s_1^*} + \frac{\lambda_2}{s_2} + \frac{\lambda_3}{s_3} + 2\frac{\lambda_4}{s_4} \tag{xiv}$$

und

$$\dot{Q}_{G-Sen} = \dot{Q}_{1-2} = \dot{Q}_{2-3} = \dot{Q}_{3-4} \tag{xv}$$

wobei $\dot{Q}_{1-2}$ für den Wärmestrom zwischen der ersten und der zweiten Schicht steht, $\dot{Q}_{2-3}$ für den Wärmestrom zwischen der zweiten und der dritten Schicht steht und $\dot{Q}_{3-4}$ für den Wärmestrom zwischen der dritten und der vierten Schicht steht.

Daraus ergibt sich:

$$\dot{Q}_{1-2} = \frac{\lambda_1}{s_1^*} \cdot A \cdot \left(\vartheta_G - \vartheta_{1-2}\right) \tag{xvi}$$

Daraus lassen sich die Temperaturen $\vartheta_{1-2}$, $\vartheta_{2-3}$ und $\vartheta_{3-4}$ ermitteln:

$$\vartheta_{1-2} = \vartheta_G - \frac{\dot{Q}_{G-Sen} \cdot \overset{\bullet}{s_1}}{A \cdot \lambda_1}$$

(xvii)

$$\vartheta_{2-3} = \vartheta_{1-2} - \frac{\dot{Q}_{G-Sen} \cdot s_2}{A \cdot \lambda_2}$$

(xviii)

$$\vartheta_{3-4} = \vartheta_{2-3} - \frac{\dot{Q}_{G-Sen} \cdot s_3}{A \cdot \lambda_3}$$

(xix)

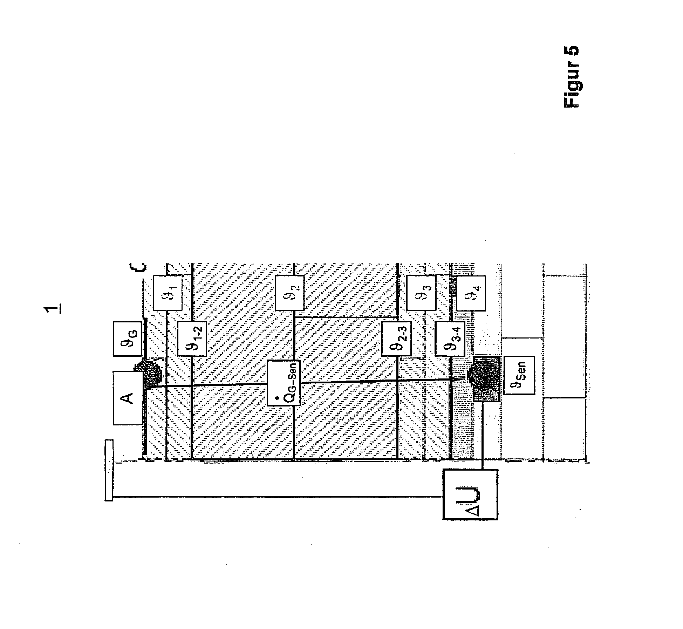

Die mittleren Temperaturen $\vartheta_1$, $\vartheta_2$, $\vartheta_3$ und $\vartheta_4$ der Schichten 1 bis 4, wie in Figur 5 angedeutet, lassen sich ermitteln aus:

$$\vartheta_1 = \frac{1}{2}\left(\vartheta_{1-2} + \vartheta_G\right)$$

(xx)

$$\vartheta_2 = \frac{1}{2}\left(\vartheta_{2-3} + \vartheta_{1-2}\right)$$

(xxi)

$$\vartheta_3 = \frac{1}{2}\left(\vartheta_{3-4} + \vartheta_{2-3}\right)$$

(xxii)

$$\vartheta_4 = \frac{1}{2}\left(\vartheta_{sen} + \vartheta_{3-4}\right)$$

(xxiii)

Es werden die Stoffwerte $\lambda_1$, $\lambda_2$, $\lambda_3$, $\lambda_4$ und $\chi_1$, $\chi_2$, $\chi_3$, $\chi_4$ in Abhängigkeit der ermittelten Temperaturen je Werkstoff der jeweiligen Schicht in Versuchen ermittelt oder Herstellerangaben entnommen.

Anschließend erfolgt die Bestimmung der neuen Restwandstärke $s_1$ nach Punkt (xii) unter Einsatz der korrigierten elektrischen Leitfähigkeit und Wärmeleitfähigkeit.

Danach erfolgt eine Prüfung:

$$A_K \geq \overset{\bullet}{s_1} - s_1 \ ?$$

(xxiv)

wobei das Abbruchkriterium $A_K$ in Form eines Differenzbetrages im Einzelfall festzulegen ist.

Abschließend, wenn das Abbruchkriterium erfüllt ist, lässt sich die Restwandstärke berechnen durch:

$$s_{Rest} = s_1 + s_2 + s_3 + \frac{1}{2} \cdot s_4$$

(xxv)

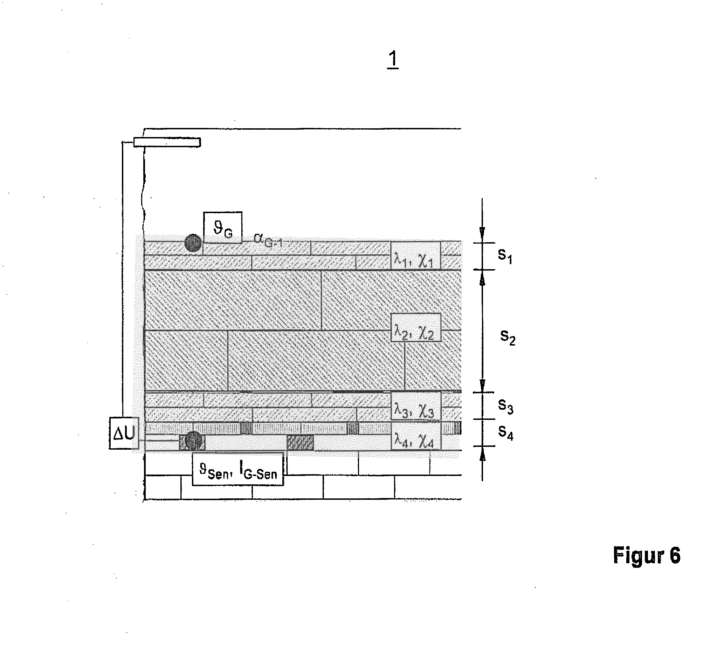

wie in Figur 6 angedeutet.

Die gesamte Berechnung lässt sich, insofern die erste Schicht $s_1$ nicht mehr vorhanden ist, mit den weiteren Schichten $s_2$, $s_3$ und $s_4$ durchführen, analog zur Ermittlung der Restwandstärke $s_1$ wie oben beschrieben.

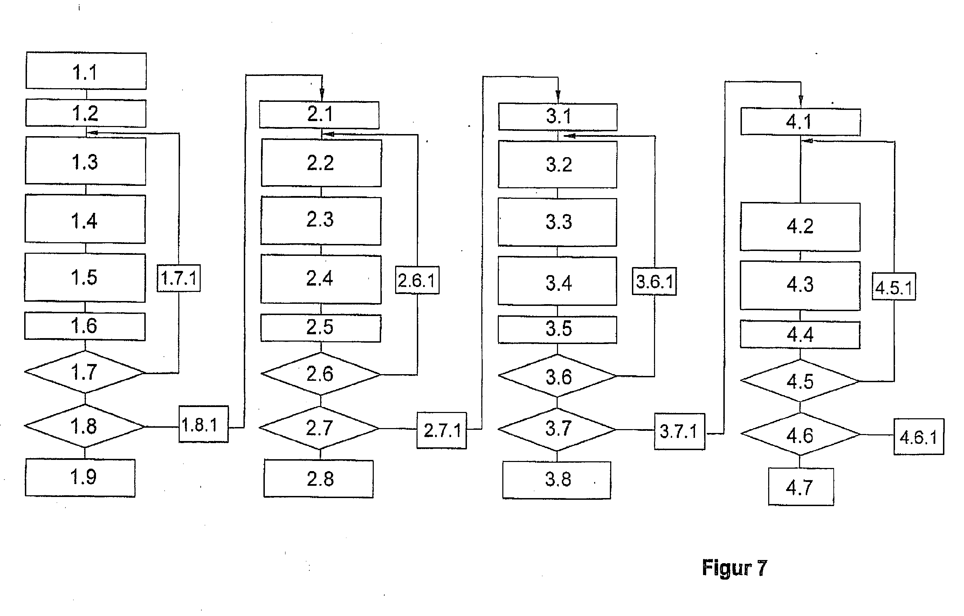

Nachfolgend ist diese Vorgehensweise anhand Figur 7 beschrieben:

Figur 7 zeigt ein Ablaufschema des erfindungsgemäßen Verfahrens, bei dem die Wandstärken der Schichten 1 bis 4 ($s_1$, $s_2$, $s_3$ und $s_4$) berechnet werden und daraus die restliche Stärke $S_{Rest}$ der Wand berechnet wird.

Es werden zur Erläuterung die Verfahrensschritte genannt, deren Nummerierung mit den Bezugszeichen in Figur 1 übereinstimmt.

Schritt:

1.1 Messung: $I_{G-Sen}$, $\vartheta_{Sen}$, $\vartheta_G$, $U_E$, $U_{Sen}$
1.2 Berechnung: $s_1^*$ nach (xii)
1.3 Berechnung: $\vartheta_{1-2}$, $\vartheta_{2-3}$, $\vartheta_{3-4}$ nach (xvii) bis (xix)
1.4 Berechnung: $\vartheta_1$, $\vartheta_2$, $\vartheta_3$, $\vartheta_4$ nach (xx) bis (xxiii)
1.5 Korrektur: $\chi_1$, $\chi_2$, $\chi_3$, $\chi_4$, $\lambda_1$, $\lambda_2$, $\lambda_3$, $\lambda_4$
1.6 Berechnung $S_1$
1.7 $A_K > s_1^* - s_1$, wenn ja: weiter mit Schritt 1.8, wenn nein: weiter mit Schritt 1.7.1
1.7.1 $s_1^* = s_1$
1.8 $s_1 \geq 0$, wenn ja: weiter mit Schritt 1.9, wenn nein weiter mit Schritt 1.8.1
1.8.1 $\vartheta_{1-2} = \vartheta_G$

1.9 Berechnung: $$S_{Rest} = S_1 + S_2 + S_3 + \frac{1}{2} \cdot S_4$$

2.1 Berechnung $s_2^*$ analog $s_1^*$
2.2 Berechnung: $\vartheta_{2-3}$, $\vartheta_{3-4}$ nach (xviii) bis (xix)
2.3 Berechnung: $\vartheta_2$, $\vartheta_3$, $\vartheta_4$ nach (xxi) bis (xxiii)
2.4 Korrektur: $\chi_2$, $\chi_3$, $\chi_4$, $\lambda_2$, $\lambda_3$, $\lambda_4$
2.5 Berechnung: $s_2$ analog $s_1$
2.6 $A_K > s_2^* - s_2$, wenn ja: weiter mit Schritt 2.7, wenn nein: weiter mit Schritt 2.6.1
2.6.1 $s_2^* = s_2$
2.7 $s_2 \geq 0$, wenn ja: weiter mit Schritt 2.8, wenn nein: weiter mit Schritt 2.7.1
2.7.1 $\vartheta_{2-3} = \vartheta_G$

2.8 Berechnung: $$S_{Rest} = S_2 + S_3 + \frac{1}{2} \cdot S_4$$

3.1 Berechnung $s_3^*$ analog $s_1^*$
3.2 Berechnung: $\vartheta_{3-4}$ nach (xix)
3.3 Berechnung: $\vartheta_3$, $\vartheta_4$ nach (xxii) und (xxiii)
3.4 Korrektur: $\chi_3$, $\chi_4$, $\lambda_3$, $\lambda_4$
3.5 Berechnung $s_3$ analog $s_1$
3.6 $A_K > s_3^* - s_3$, wenn ja: weiter mit Schritt 3.7, wenn nein: weiter mit Schritt 3.6.1
3.6.1 $s_3^* = s_3$
3.7 $s_3 \geq 0$, wenn ja: weiter mit Schritt 3.8, wenn nein: weiter mit Schritt 3.7.1

3.7.1 $\vartheta_{3-4} = \vartheta_G$

3.8 Berechnung: $$S_{Rest} = S_3 + \frac{1}{2} \cdot S_4$$

4.1 Berechnung $s_4^*$ analog $s_1^*$
4.2 Berechnung: $\vartheta_4$ nach (xxiii)
4.3 Korrektur: $\chi_4$, $\lambda_4$
4.4 Berechnung $s_4$ analog $s_1$
4.5 $A_K > s_4^* - s_4$, wenn ja: weiter mit Schritt 4.6, wenn nein: weiter mit Schritt 4.5.1
4.5.1 $s_4^* = s_4$
4.6 $\frac{1}{2} s_4 \geq 0$, wenn ja: weiter mit Schritt 4.7, wenn nein: weiter mit Schritt 4.6.1
4.6.1 ALARM

4.7 Berechnung: $$S_{Rest} = \frac{1}{2} \cdot S_4$$

Zur Erläuterung des Verfahrens werden nachfolgend die Verfahrensschritte erneut beschrieben, wobei beispielhaft Bezug genommen wird auf die Berechnung der Restwandstärke in einem Bassinboden einer Schmelzanlage, insbesondere einer Glasschmelzanlage.

Es werden die folgenden Schritte durchgeführt:

1. Messung der Glasbadtemperatur $\vartheta_G$ zum aktuellen Zeitpunkt t,

2. Messung der anliegenden Elektrodenspannung $U_E$ gegen Erde zum aktuellen Zeitpunkt t,

3. Messung der anliegenden Sensorspannung $U_{sen}$ gegen Erde zum aktuellen Zeitpunkt t,

4. Alternativ zur Messung der Elektrodenspannung $U_E$ und der Sensorspannung $U_{Sen}$ gegen Erde die Messung der Spannung zwischen Elektrode und Sensor $\Delta U$,

5. Messung der Sensortemperatur $\vartheta_{Sen}$ zum aktuellen Zeitpunkt t,

6. Messung des elektrischen Stromes $I_{G\text{-}Sen}$ zwischen Glasbad und Sensorfeld zum aktuellen Zeitpunkt t (z. B.: 1 x täglich),

7. Berücksichtigung der temperaturabhängigen Stoffwerte der elektrischen Leitfähigkeit $\chi_x$ und der Wärmeleitfähigkeit $\lambda_x$. Diese werden für jede eingebaute Materialschicht X des Bodenaufbaus vor dem Einbau im Labor bestimmt oder aus technischen Materialkennwerten verwendet.

8. Die temperaturabhängigen Stoffwerte der Wärmeleitfähigkeit $\lambda_x$ und der elektrischen Leitfähigkeit $\chi_x$ werden in einer Datei-Matrix für die Berechnungen bereitgestellt.

9. Berechnung der Restwandstärke $S_{ges}$ und die Schichtstärke $s_x$ der einzelnen Schichten X des Bodenaufbaus in 1. Nährung für jedes Sensorfeld. Es werden verwendet:

   i. die elektrische Leitfähigkeit $\chi_x$, entnommen aus der Datei-Matrix,
   ii. die anliegende Elektrodenspannung $U_E$,
   iii. die anliegende Sensorspannung $U_{sen}$ und
   iv. der elektrische Strom $I_{G\text{-}Sen}$.

10. Berechnung der mittleren Schichttemperaturen $\vartheta_x$ der einzelnen Schichten X des Bodenaufbaus unter Verwendung der Wärmeleitfähigkeit $\lambda_x$ und den in der ersten Nährung bestimmten Schichtstärken $s_x$ jeder Schicht X.

11. Korrektur der elektrischen Leitfähigkeit $\chi_x$ und der Wärmeleitfähigkeit $\lambda_x$ in Abhängigkeit der mittleren Schichttemperatur $\vartheta_x$, entnommen aus der Datei-Matrix.

12. Berechnung der Restwandstärke $S_{ges}$ und die Schichtstärken $S_x$ der einzelnen Schichten X des Bodenaufbaus in weiteren Nährungen für jedes Sensorfeld. Es werden verwendet:

   i. die korrigierte elektrische Leitfähigkeit $\chi_x$ in Abhängigkeit der mittleren berechneten Schichttemperatur $\vartheta_x$,
   ii. die anliegende Elektrodenspannung $U_E$,
   iii. die anliegende Sensorspannung $U_{Sen}$ und
   iv. der elektrische Strom $I_{G\text{-}Sen}$.

13. Vergleich der Restwandstärke $S_{ges}$ einer Näherung mit der vorhergehenden Näherung.

14. Abbruch der Rechnungen bei der Unterschreitung des festgelegten Abbruchkriteriums mit Ausgabe sowie Speicherung der Ergebnisse für den Zeitpunkt t.

15. Fortführung der Rechnungen bei der Überschreitung des festgelegten Abbruchkriteriums mit:

   i. Berechnung der mittleren Schichttemperaturen $\vartheta_x$ der einzelnen Schichten X des Bodenaufbaus unter Verwendung der Wärmeleitfähigkeit $\lambda_x$ und den in der ersten Nährung bestimmten Dicke $s_x$ jeder Schicht X,
   ii. Korrektur der elektrischen Leitfähigkeit $\chi_x$ und der Wärmeleitfähigkeit $\lambda_x$ in Abhängigkeit der mittleren Schicht-

temperatur $\vartheta_x$,

iii. Berechnung der Restwandstärke $S_{ges}$ und die Schichtstärken $S_x$ der einzelnen Schichten X des Bodenaufbaus in weiteren Nährungen.

16. Prüfung der Ergebnisse aktuellen Messung zum Zeitpunkt t mit der vorhergehenden Messung zum Zeitpunkt t-1 einschließlich Plausibilitätsprüfung zum aktuellen Zeitpunkt t :

Bodenstärke Abnahme (richtig) oder Konstanz (richtig) oder Zunahme (falsch).

17. Prüfung der aktuellen oberen Schichtstärke $s_x \geq 0$. Bei Unterschreitung von Null ist diese Schicht "verbraucht".

18. Interpolation der Restwandstärke $s_{ges}$ zwischen allen benachbarten Sensorfeldern über die gesamte, sensorkontrollierte Bodenfläche.

19. Speicherung der Messdaten und Rechenergebnisse.

20. Ausgabe der Restwandstärke $s_{ges}$ für jedes Feld als Zahlenwert.

21. Anzeige des Bodenaufbaus mit Visualisierung der Glaseindringtiefe $S_G$ im Boden für jedes Sensorfeld.

22. Ausgabe von Trendverläufen für jedes Sensorfeld (Kurven) aus n Messungen.

23. Ausgabe von visualisierten Bodenprofilen über alle abgedeckten Sensorflächen zum aktuellen Zeitpunkt t.

Es bietet sich dabei an, dass die Messergebnisse als Mittelwert aus fünf Einzelwerten einer aktuellen Messung zum aktuellen Zeitpunkt t (z. B. innerhalb von 1 - 60 sec.) bestimmt werden.

**Bezugszeichenliste**

| | |
|---|---|
| $\vartheta_{Sen}$ | Temperatur des Sensors in [K] |
| $\vartheta_G$ | Temperatur des Glases in [K] |
| $I_{G\text{-}Sen}$ | Strom zwischen Glas und Sensor in [mA] |
| $U_E$ | Elektrodenspannung in [V] |
| $U_{Sen}$ | Sensorspannung in [V] |
| $\Delta U \ldots$ | Spannung zwischen Elektrode und Sensor in [V] |
| $s_{i=1, \ldots}$ | Dicke der Bodenlagen i in [mm] |
| $\lambda_{i=1,\ldots}$ | Wärmeleitfähigkeit [W/(m K)] |
| $\chi_{i=1,\ldots}$ | elektrische Leitfähigkeit in [A/(m V)] |
| $S_{Rest}$ | Restwandstärke in [mm] |
| $A$ | wirksame Fläche in [mm] |
| $\dot{Q}_{G\text{-}Sen}$ | Wärmestrom von der Glasschmelze zum Sensor |
| $\vartheta_{1\text{-}2}$ | Temperatur zwischen erster und zweiter Schicht |
| $\vartheta_{2\text{-}3}$ | Temperatur zwischen zweiter und dritter Schicht |

$\vartheta_{3\text{-}4}$ Temperatur zwischen dritter und vierter Schicht

$\vartheta_1$ Temperatur der ersten Schicht

$\vartheta_2$ Temperatur der zweiten Schicht

$\vartheta_3$ Temperatur der dritten Schicht

$\vartheta_4$ Temperatur der vierten Schicht

**Patentansprüche**

1. Verfahren zur rechnerischen Bestimmung der restlichen Stärke ($s_n$) zumindest einer Wand eines Gefäßes, insbesondere einer Schmelzwanne, bei dem unter Verwendung des elektrischen Widerstandes und der elektrischen Leitfähigkeit ($\chi$) der Wand eine theoretische Wandstärke ($s_n{}^*$) berechnet wird, die Temperatur der Wand rechnerisch unter Einbeziehung der theoretischen Wandstärke ($s_n{}^*$) bestimmt wird, und die elektrische Leitfähigkeit ($\chi$) in Abhängigkeit von der ermittelten Temperatur korrigiert wird, und danach die Wandstärke ($s_n$) unter Verwendung der korrigierten elektrischen Leitfähigkeit ($\chi$) erneut berechnet wird.

2. Verfahren zur rechnerischen Bestimmung der restlichen Stärke ($s_n$) zumindest einer Wand eines Gefäßes nach Anspruch 1, welches zur Verwendung des elektrischen Widerstandes der Wand die folgenden Schritte umfasst:

   a) Messung einer Spannung ($U_E$) zwischen einem im Gefäß aufgenommenen Medium und der Erde,
   b) Messung einer Spannung ($U_{sen}$) zwischen einem auf der Rückseite der zu messenden Wand angeordneten Sensor und der Erde,
   c) Messung einer Stromstärke ($I_{G\text{-}Sen}$) zwischen dem im Gefäß aufgenommenen Medium und dem Sensor,
   d) Bestimmung einer wirksamen Fläche (A) der zu untersuchenden Wand, durch die der Stromfluss vom im Gefäß aufgenommenen Medium zum Sensor erfolgt,
   e) Ermittlung der theoretischen Wandstärke ($s_n{}^*$) unter Einbeziehung der elektrischen Leitfähigkeit ($\chi$) des Materials der Wand mit der mathematischen Beziehung (1)

$$s_n^* = \frac{(U_E - U_{Sen}) \cdot A \cdot \chi}{I_{G\text{-}Sen}}$$

   f) Feststellung der Temperatur der Wand an der stromdurchflossenen Stelle,
   g) Korrektur des Wertes der elektrischen Leitfähigkeit ($\chi$) in Abhängigkeit der Temperatur der Wand,
   h) Durchführung wenigstens einer Wiederholung der Ermittlung der theoretischen Wandstärke ($s_n{}^*$) mit der mathematischen Beziehung (1) unter Nutzung der korrigierten elektrischen Leitfähigkeit ($\chi$),
   i) Ausgabe des letztermittelten Wertes ($s_n{}^*$) als Wandstärke ($s_n$).

3. Verfahren zur rechnerischen Bestimmung der restlichen Stärke ($s_n$) zumindest einer Wand eines Gefäßes nach Anspruch 2, bei dem die wirksame Fläche (A) durch die Beziehung (2) ermittelt wird:

$$A = \frac{I_{G\text{-}Sen}}{(U_E - U_{Sen})}\left(\frac{s}{\chi}\right)$$

4. Verfahren zur rechnerischen Bestimmung der restlichen Stärke ($s_n$) zumindest einer Wand eines Gefäßes nach zumindest einem der Ansprüche 2 oder 3, bei dem die Temperatur der Wand ($\vartheta$) rechnerisch unter Einbeziehung des Wärmestromes ($\dot{Q}$) durch die Wand, der Wärmeleitfähigkeit ($\lambda$) der Wand, der ermittelten theoretischen Wandstärke ($s_n{}^*$), der ermittelten wirksamen Fläche (A) sowie der Temperatur ($\vartheta_G$) des Mediums im Behälter ermittelt wird.

5. Verfahren zur rechnerischen Bestimmung der restlichen Stärke ($s_n$) zumindest einer Wand eines Gefäßes nach wenigstens einem der Ansprüche 2 bis 4, bei dem die Ermittlung der theoretischen Wandstärke ($s_n^*$) mit der mathematischen Beziehung (1) unter Nutzung der korrigierten elektrischen Leitfähigkeit ($\chi$) so oft wiederholt wird, bis ein Abbruchkriterium ($A_K$) in Form einer bestimmten Differenz zwischen einer zuvor bestimmten theoretischen Wandstärke ($s_{n-1}^*$) und einer letztbestimmten theoretischen Wandstärke ($s_n^*$) erreicht ist, wonach der letztermittelte Wert ($s_n^*$) als Wandstärke ($s_n$) ausgegeben wird.

6. Verfahren zur rechnerischen Bestimmung der restlichen Stärke ($s_n$) zumindest einer Wand eines Gefäßes nach Anspruch 5, bei dem das Abbruchkriterium ($A_K$) zwischen 0,1 mm bis 50 mm beträgt.

7. Verfahren zur rechnerischen Bestimmung der restlichen Stärke ($s_n$) zumindest einer Wand eines Gefäßes nach wenigstens einem der Ansprüche 2 bis 6, wobei das Verfahren an einer mehrere Schichten umfassenden Wand durchgeführt wird, und zur Bestimmung der Wandstärke einer jeweiligen Schicht nacheinander an den Schichten durchgeführt wird.

8. Verfahren zur rechnerischen Bestimmung der restlichen Stärke ($s_n$) zumindest einer Wand eines Gefäßes nach Anspruch 7, dass die Stärke einer Schicht ($sch_n$) erst ermittelt wird, wenn die Ermittlung der Stärke der in Richtung des Mediums vorgelagerten Schicht ($sch_{n-1}$) eine Stärke von 0 mm ergibt.

9. Verfahren zur rechnerischen Bestimmung der restlichen Stärke ($s_n$) zumindest einer Wand eines Gefäßes nach wenigstens einem der Ansprüche 2 bis 8, bei dem die elektrische Leitfähigkeit ($\chi$) des Materials der zu berechnenden Wand in Versuchen ermittelt wird.

10. Verfahren zur rechnerischen Bestimmung der restlichen Stärke ($s_n$) zumindest einer Wand eines Gefäßes nach wenigstens einem der Ansprüche 2 bis 9, bei dem Trendverläufe der restlichen Wandstärke ($s_n$) je wirksamer Fläche aus mehreren (n) Bestimmungen der restlichen Stärke ($s_n$) erstellt werden und diese Trendverläufe ausgegeben werden.

11. Verfahren zur rechnerischen Bestimmung der restlichen Stärke ($s_n$) zumindest einer Wand eines Gefäßes nach wenigstens einem der Ansprüche 2 bis 10, bei dem die Feststellung der Temperatur der Wand an der stromdurchflossenen Stelle durch einen potentialgetrennten Sensor erfolgt.

12. Verfahren zur rechnerischen Bestimmung eines Wandstärkenverlaufs einer Wand eines Gefäßes, bei dem das Verfahren zur rechnerischen Bestimmung der restlichen Stärke ($s_n$) zumindest einer Wand eines Gefäßes gemäß wenigstens einem der Ansprüche 2 bis 11 durchgeführt wird, wobei die zu jeweils einer wirksamen Fläche (A) ermittelten Wandstärken ($s_n$) einer Interpolation zur Ermittlung des Restwandstärkenverlaufs ($s_{ges}$) zwischen mehreren benachbarten wirksamen Flächen (An) durchgeführt wird und der interpolierte Verlauf ausgegeben wird.

13. Vorrichtung zur rechnerischen Bestimmung der restlichen Stärke ($s_n$) zumindest einer Wand eines Gefäßes, welche einen Behälter, insbesondere Behälter zur Aufnahme einer Glasschmelze, eine Einrichtung zur Spannungsapplikation, eine Einrichtung zur Spannungsmessung, eine Einrichtung zur Strömstärkemessung, eine Einrichtung zur Temperaturmessung sowie eine Steuerungseinheit umfasst, wobei die Steuerungseinrichtung derart eingerichtet ist, das Verfahren gemäß wenigstens einem der Ansprüche 1 bis 11 und/oder das Verfahren gemäß Anspruch 12 zu steuern und die Berechnungsvorgänge vorzunehmen.

14. Vorrichtung zur rechnerischen Bestimmung der restlichen Stärke ($s_n$) zumindest einer Wand eines Gefäßes nach Anspruch 13, bei der die Einrichtung zur Temperaturmessung im Medium einen ersten Temperaturfühler umfasst, der dicht oder unmittelbar an der wirksamen Fläche angeordnet ist, und einen zweiten Temperaturfühler umfasst, der an der dem Medium gegenüberliegenden Seite der Wand angeordnet ist.

15. Vorrichtung zur rechnerischen Bestimmung der restlichen Stärke ($s_n$) zumindest einer Wand eines Gefäßes nach einem der Ansprüche 13 oder 14, bei der die Wand mehrschichtig ausgeführt ist.

16. Computerprogramm, das es einer Datenverarbeitungseinrichtung ermöglicht, nachdem es in Speichermittel der Datenverarbeitungseinrichtung geladen worden ist, ein Verfahren zur rechnerischen Bestimmung der restlichen Stärke ($s_n$) zumindest einer Wand eines Gefäßes gemäß wenigstens einem der Ansprüche 2 bis 11 durchzuführen.

**Claims**

1.  A method for calculating the remaining thickness ($s_n$) of at least one wall of a container, in particular a melting tank, in which by using the electrical resistance and electrical conductivity ($\chi$) of the wall, a theoretical wall thickness ($s_n{}^*$) is calculated, the temperature of the wall is calculated with the inclusion of the theoretical wall thickness ($s_n{}^*$), and the electrical conductivity ($\chi$) is corrected depending on the calculated temperature, and afterwards, the wall thickness ($s_n$) is again calculated using the corrected electrical conductivity ($\chi$).

2.  The method for calculating the remaining thickness ($s_n$) of at least one wall of a container according to claim 1, which in order to use the electrical resistance of the wall comprises the following steps:

    a) Measurement of a voltage ($U_E$) between a medium held in the container and the ground
    b) Measurement of a voltage ($U_{sen}$) between a sensor arranged on the rear side of the wall to be measured and the ground
    c) Measurement of a current strength ($I_{G-Sen}$) between the medium held in the container and the sensor
    d) Calculation of an operant surface (A) of the wall to be examined, through which the current flows from the medium held in the container to the sensor
    e) Calculation of the theoretical wall thickness ($s_n{}^*$) with the inclusion of the electrical conductivity ($\chi$) of the material of the wall with the mathematical relation (1)

    $$s_n^* = \frac{(U_E - U_{Sen}) \cdot A \cdot \chi}{I_{G-Sen}}$$

    f) Calculation of the temperature of the wall at the point at which the current flows through
    g) Correction of the value of the electrical conductivity ($\chi$) depending on the temperature of the wall
    h) Implementation of at least one repetition of the calculation of the theoretical wall thickness ($s_n{}^*$) with the mathematical relation (1) using the corrected electrical conductivity ($\chi$)
    i) Release of the last calculated value ($s_n{}^*$) as the wall thickness ($s_n$).

3.  The method for calculating the remaining thickness ($s_n$) of at least one wall of a container according to claim 2, in which the operant surface (A) is calculated by relation (2):

    $$A = \frac{I_{G-Sen}}{(U_E - U_{Sen})}\left(\frac{s}{\chi}\right)$$

4.  The method for calculating the remaining thickness ($s_n$) of at least one wall of a container according to at least one of claims 2 or 3, in which the temperature of the wall ($\vartheta$) is calculated with the inclusion of the thermal flow (Q) through the wall, the thermal conductivity ($\lambda$) of the wall, the calculated theoretical wall thickness ($s_n{}^*$) of the calculated operant surface (A), and the temperature ($\vartheta_G$) of the medium in the container.

5.  The method for calculating the remaining thickness ($s_n$) of at least one wall of a container according to at least one of claims 2 to 4, in which the calculation of the theoretical wall thickness ($s_n{}^*$) with the mathematical relation (1) using the corrected electrical conductivity ($\chi$) is repeated until a termination criterion ($A_K$) in the form of a calculated difference between a previously calculated theoretical wall thickness ($s_n{}^*$) and the last calculated theoretical wall thickness ($s_n{}^*$) is achieved, according to which the last calculated value ($s_n{}^*$) is released as the wall thickness ($s_n$).

6.  The method for calculating the remaining thickness ($s_n$) of at least one wall of a container according to claim 5, in which the termination criterion ($A_K$) is between 0.1 mm and 50 mm.

7.  The method for calculating the remaining thickness ($s_n$) of at least one wall of a container according to at least one of claims 2 to 6, wherein the method is conducted on a wall comprising multiple layers, and to calculate the wall thickness of one respective layer after another on the layers.

8. The method for calculating the remaining thickness ($s_n$) of at least one wall of a container according to claim 7, wherein the thickness of a layer ($sch_n$) is only calculated when the calculation of the thickness of the layer ($sch_{n-1}$) in front in the direction of the medium results in a thickness of 0 mm.

9. The method for calculating the remaining thickness ($s_n$) of at least one wall of a container according to at least one of claims 2 to 8, in which the electrical conductivity ($\chi$) of the material of the wall to be calculated is determined in experiments.

10. The method for calculating the remaining thickness ($s_n$) of at least one wall of a container according to at least one of claims 2 to 9, in which the tendential progressions of the remaining wall thickness ($s_n$) for each operant surface are produced from several (n) calculations of the remaining thickness ($s_n$), and these tendential progressions are released.

11. The method for calculating the remaining thickness ($s_n$) of at least one wall of a container according to at least one of claims 2 to 10, in which the temperature of the wall at the point at which the current flows through is determined using a floating sensor.

12. The method for calculating a wall thickness progression of a wall of a container, in which the method for calculating the remaining thickness ($s_n$) of at least one wall of a container according to at least one of claims 2 to 11 is conducted, wherein the wall thicknesses ($s_n$) calculated with regard to one operant surface (A) respectively are subjected to an interpolation to calculate the remaining wall thickness progression ($s_{ges}$) between several adjacent operant surfaces (An), and the interpolated progression is released.

13. A device to calculate the remaining thickness ($s_n$) of at least one wall of a container, which comprises a vessel, in particular a vessel for holding molten glass, a facility for applying voltage, a facility for measuring voltage, a facility for measuring current strength, a facility for measuring temperature and a control unit, wherein the control unit is set up in such a manner that it can control the method according to at least one of claims 1 to 11 and/or the method according to claim 12 and conduct the calculation processes.

14. The device to calculate the remaining thickness ($s_n$) of at least one wall of a container according to claim 13, in which the facility for measuring the temperature in the medium comprises a first temperature which is closely or directly arranged on the operant surface, and a second temperature sensor, which is arranged on the side of the wall opposite the medium.

15. The device to calculate the remaining thickness ($s_n$) of at least one wall of a container according to claim 13 or 14, in which the wall has multiple layers.

16. A computer program which enables a data processing facility, after it has been loaded in storage means of the data processing facility, to implement a method for calculating the remaining thickness ($s_n$) of at least one wall of a container according to at least one of claims 2 to 11.

**Revendications**

1. Procédé de détermination par voie de calcul de l'épaisseur restante ($S_n$) d'au moins une paroi d'un récipient, en particulier d'une cuve de fusion, dans lequel, en utilisant la résistance électrique et la conductibilité électrique ($\chi$) de la paroi, une épaisseur de paroi théorique ($S_n^*$) est calculée, la température de la paroi est déterminée par voie de calcul en prenant en compte l'épaisseur de paroi théorique ($S_n^*$) et la conductibilité électrique ($\chi$) est corrigée en fonction de la température définie, et ensuite l'épaisseur de paroi ($S_n$) est calculée de nouveau en utilisant la conductibilité électrique ($\chi$) corrigée.

2. Procédé de détermination par voie de calcul de l'épaisseur restante ($S_n$) d'au moins une paroi d'un récipient selon la revendication 1, qui comprend, pour l'utilisation de la résistance électrique de la paroi, les étapes suivantes :

   a) mesure d'une tension ($U_E$) entre un agent reçu dans le récipient et la terre,

b) mesure d'une tension ($U_{sen}$) entre un capteur disposé sur le côté arrière de la paroi à mesurer et la terre,

c) mesure d'une intensité ($I_{G-Sen}$) entre l'agent reçu dans le récipient et le capteur,

d) détermination d'une surface active (A) de la paroi à examiner à travers laquelle s'effectue le flux de courant depuis l'agent reçu dans le récipient vers le capteur,

e) définition de l'épaisseur de paroi théorique ($S_n$*) en prenant en compte de la conductibilité électrique ($\chi$) du matériau de la paroi avec la relation mathématique (1)

$$s_n^* = \frac{(U_E - U_{Sen}) \cdot A \cdot \chi}{I_{G-Sen}}$$

f) constatation de la température de la paroi à l'emplacement parcouru par le courant,

g) correction de la valeur de la conductibilité électrique ($\chi$) en fonction de la température de la paroi,

h) réalisation d'au moins une répétition de la définition de l'épaisseur de paroi théorique ($S_n$*) avec la relation mathématique (1) en utilisant la conductibilité électrique ($\chi$) corrigée,

i) délivrance de la valeur ($S_n$*) définie en dernier en tant qu'épaisseur de paroi ($S_n$).

3. Procédé de détermination par voie de calcul de l'épaisseur restante ($S_n$) d'au moins une paroi d'un récipient selon la revendication 2, dans lequel la surface active (A) est définie par la relation (2) :

$$A = \frac{I_{G-Sen}}{(U_E - U_{Sen})} \left( \frac{s}{\chi} \right)$$

4. Procédé de détermination par voie de calcul de l'épaisseur restante ($S_n$) d'au moins une paroi d'un récipient selon au moins l'une des revendications 2 ou 3, dans lequel la température de la paroi ($\vartheta$) est définie par voie de calcul en prenant en compte le flux thermique (Q) à travers la paroi, la conductibilité thermique ($\lambda$) de la paroi, l'épaisseur de paroi théorique ($S_n$*) définie, la surface active (A) définie ainsi que la température ($\vartheta_G$) de l'agent dans le réservoir.

5. Procédé de détermination par voie de calcul de l'épaisseur restante ($S_n$) d'au moins une paroi d'un récipient selon au moins l'une des revendications 2 à 4, dans lequel la définition de l'épaisseur de paroi théorique ($S_n$*) avec la relation mathématique (1) en utilisant la conductibilité électrique ($\chi$) corrigée est répétée jusqu'à ce qu'un critère d'interruption ($A_K$) sous la forme d'une différence déterminée entre une épaisseur de paroi théorique ($S_{n-1}$*) définie antérieurement et une épaisseur de paroi théorique ($S_n$*) déterminée en dernier soit atteint, après quoi la valeur ($S_n$*) définie en dernier est délivrée en tant qu'épaisseur de paroi ($S_n$).

6. Procédé de détermination par voie de calcul de l'épaisseur restante ($S_n$) d'au moins une paroi d'un récipient selon la revendication 5, dans lequel le critère d'interruption ($A_K$) est compris entre 0,1 mm et 50 mm.

7. Procédé de détermination par voie de calcul de l'épaisseur restante ($S_n$) d'au moins une paroi d'un récipient selon au moins l'une des revendications 2 à 6, le procédé étant exécuté sur une paroi comprenant plusieurs couches, et étant réalisé sur les couches l'une après l'autre pour la détermination de l'épaisseur de paroi d'une couche respective.

8. Procédé de détermination par voie de calcul de l'épaisseur restante ($S_n$) d'au moins une paroi d'un récipient selon la revendication 7, l'épaisseur d'une couche ($sch_n$) n'étant définie que quand la définition de l'épaisseur de la couche ($sch_n$-1) placée devant dans la direction de l'agent donne une épaisseur de 0 mm.

9. Procédé de détermination par voie de calcul de l'épaisseur restante ($S_n$) d'au moins une paroi d'un récipient selon au moins l'une des revendications 2 à 8, dans lequel la conductibilité électrique ($\chi$) du matériau de la paroi à calculer est définie dans des essais.

10. Procédé de détermination par voie de calcul de l'épaisseur restante ($S_n$) d'au moins une paroi d'un récipient selon au moins l'une des revendications 2 à 9, dans lequel des courbes de tendance de l'épaisseur de paroi restante ($S_n$) pour chaque surface active sont établies à partir de plusieurs (n) déterminations de l'épaisseur restante ($S_n$), et ces courbes de tendance sont délivrées.

11. Procédé de détermination par voie de calcul de l'épaisseur restante ($S_n$) d'au moins une paroi d'un récipient selon au moins l'une des revendications 2 à 10, dans lequel la constatation de la température de la paroi à l'emplacement parcouru par le courant s'effectue avec un capteur découplé galvaniquement.

12. Procédé de détermination par voie de calcul d'une courbe de l'épaisseur de paroi d'une paroi d'un récipient, dans lequel est effectué le procédé de détermination par voie de calcul de l'épaisseur restante ($S_n$) d'au moins une paroi d'un récipient selon au moins l'une des revendications 2 à 11, les épaisseurs de paroi (Sn) définies pour à chaque fois une surface active (A) étant soumises à une interpolation pour la définition de la courbe d'épaisseur de paroi restante ($S_{ges}$) entre plusieurs surfaces actives (An) voisines, et la courbe interpolée est délivrée.

13. Dispositif de détermination par voie de calcul de l'épaisseur restante ($S_n$) d'au moins une paroi d'un récipient, qui comprend un réservoir, en particulier un réservoir pour la réception d'une masse de verre en fusion, un équipement d'application de tension, un équipement de mesure de tension, un équipement de mesure d'intensité, un équipement de mesure de température ainsi qu'une unité de commande, l'équipement de commande étant aménagé de façon à commander le procédé selon au moins l'une des revendications 1 à 11 et/ou le procédé selon la revendication 12 et à effectuer les processus de calcul.

14. Dispositif de détermination par voie de calcul de l'épaisseur restante ($S_n$) d'au moins une paroi d'un récipient selon la revendication 13, dans lequel l'équipement de mesure de la température dans l'agent comprend une première sonde de température qui est disposée de façon adjacente à la surface active ou directement sur celle celle-ci, et comprend une deuxième sonde de température qui est disposée sur le côté de paroi qui est en face de l'agent.

15. Dispositif de détermination par voie de calcul de l'épaisseur restante ($S_n$) d'au moins une paroi d'un récipient selon l'une des revendications 13 ou 14, dans lequel la paroi est réalisée en plusieurs couches.

16. Programme par voie de calcul qui permet à un équipement de traitement de données, après que ce programme été chargé dans la mémoire de l'équipement de traitement de données, d'effectuer un procédé de détermination par voie de calcul de l'épaisseur restante ($S_n$) d'au moins une paroi d'un récipient selon au moins l'une des revendications 2 à 11.

Figur 1

1

A  $\vartheta_G$

$\lambda_1, \chi_1$    $s_1$

$\lambda_2, \chi_2$

$I_{G\text{-}Sen}$    $s_2$

$\lambda_3, \chi_3$    $s_3$

$U_E$

$\lambda_4, \chi_4$    $s_4$

$U_{Sen}$

$\vartheta_{Sen}, I_{G\text{-}Sen}$

**Figur 2**

EP 2 407 751 B1

**Figur 3**

Figur 4

Figur 5

Figur 6

Figur 7

EP 2 407 751 B1

**IN DER BESCHREIBUNG AUFGEFÜHRTE DOKUMENTE**

**In der Beschreibung aufgeführte Patentdokumente**

- EP 1004863 A1
- DE 10244826 A1
- DE 4136447
- FR 2605409